# EUROPEAN PATENT APPLICATION

(11) **EP 4 570 145 A1**
(43) Date of publication of application: **18.06.2025**
(21) Application number: 23461690.2
(22) Date of filing: 15.12.2023
(51) Int. Cl.: A47J 37/07

(54) **SUPPORTING STRUCTURE FOR CERAMIC GRILL**

(71) Applicant: Optimum Sp. z o.o., 30-149 Krakow (PL)
(72) Inventor: Goraj, Jaros aw, 30-376 Krakow (PL); Kochana, Konrad, 32-050 Skawina (PL); Goraj, Marcin, 32-089 Beblo (PL)
(74) Representative: Czarnik, Maciej

(57) **Abstract**

A supporting structure for a ceramic grill comprising substantially cuboidal framework supporting structure (1) that comprises vertical edges (11) and horizontal edges (12) and supporting bracket (2). The structure is characterized in that supporting bracket (2), which has a shape resembling the letter 'h', comprises longer substantially vertical element (21), shorter substantially vertical element (22) and connecting horizontal element (23) supported by the said shorter element (22), wherein longer element (21) connects two horizontal edges (12) of support frame (1), and supporting bracket (2) is further provided with adapter (3) for supporting and positioning the grill in the vertical axis, wherein adapter (2) is supported by horizontal element (23) and additionally fixed to side wall (24) of longer vertical element (21).

## Description

The invention relates to a supporting structure for a ceramic grill comprising a framework supporting structure and a supporting bracket. The supporting structure is especially suitable for supporting and positioning a kamado ceramic grill, has adequate strength and provides the necessary stability.

The kamado ceramic charcoal grill is based on traditions that date back many centuries and is inspired by traditional Chinese ceramic vessels. Kamado is a word of Japanese origin that literally translates as 'stove' or 'cooker'. It is used to describe a traditional Japanese cooker, fired by wood or charcoal. Contemporary ceramic kamado grills are oval-shaped vessels with a dome-shaped lid. Its improved versions may include additional components such as thermometers or air valves for temperature control. Due to its ceramic coating, the grill heats up quickly and can reach very high temperatures, maintaining heat for a very long time. On the other hand, the ceramic structure of the grill makes it very heavy, therefore its weight, depending on the model and size, may exceed 120 kg (net weight). Moreover, ceramic products have variable dimensions and their installation requires the brackets to be adaptable to a specific product. In addition, the stability of the structure on which the ceramic grill is supported is extremely important due to its heavy weight and high temperatures - and must ensure that it is safe to use. At the same time, to ensure ease of use (e.g. when removing ashes), it is important that the supporting structure allows adequate access to the lower part of the ceramic grill.

Various grill designs are known in the state of the art. US Patent US9402508 B2 describes a rotating support frame and transport device for supporting, loading and unloading a ceramic cooker, a smoker or a grill of an oval, cylindrical or spherical shape. The rotating cooker support frame has a freely rotating cooker basket and a detachable manual trolley to keep the cooker upright during loading and storage. The manual trolley comprises a frame with wheels and a locking handle to maintain a suitable clearance between the supporting surface and the cooker supported on a raised platform. The trolley frame and locking handle can be detached from the frame supporting the cooker. The cooker frame and the manual trolley assembly are configured to be easily movable onto an elevated platform, such as a truck chassis or an elevated floor such as a raised patio or terrace floor. The transport unit facilitates the cooking of food that is then transported to the serving area.

US application US9237828 B2 discloses a kamado-type charcoal grill that comprises a supporting structure that holds the ceramic vessel in a secure position and at a suitable height during cooking. The supporting structure is symmetrical, provides 4 points of support and may include castor wheels . The supporting structure does not provide any shelves, drawers or a working surface in the vicinity of the grill.

US application US20180078090 A1 discloses a kamado cooking system that includes a kamado cooker and a cooker trolley. The cooker trolly includes a base having a first side, a second side opposite the first side and at least one horizontal base support that holds the cooker. The trolley is made of material of sufficient strength to hold at least one cooker, such as different types of metals (cast iron, steel, etc.), composites, wood. The trolley can optionally include shelves. The cooker installed on the trolley is not made of ceramic, but of cast iron.

US application US2004035408 AA discloses a gas grill rack, specifically a grill rack with a sliding trolley assembly that enables the installation and removal of propane cylinders. Conventional propane-fired gas grills have a fixed gas cylinder storage area , which requires the user to bend over or to kneel when removing and installing the cylinder under the grill. As a result of this process, the gas cylinder usually needs to be placed on a thin metal bar, secured using a wire attached to its top, whereby the cylinder is connected to agas line running from the grill. The gas cylinder is relatively heavy, thus the process of changing cylinders is difficult and inconvenient, especially for the elderly or disabled.

European application EP1401312 A1, on the other hand, discloses a grill mounting structure that comprises a grill housing supporting structure comprising first and second support elements for supporting the grill housing in a generally horizontal position, and a crossbar. The assembly includes a connector for the manual connection of the crossbar with the first support element and for the manual connection of the crossbar with the second support element. The first and second support elements and the linking element comprise a substantially rigid structure.

Existing structures known in the state of the art are not made to support a heavy ceramic grill in a stable manner and to provide easy access and working surface. The aim of the invention is to provide a supporting structure for a ceramic grill that is sufficiently strong and provides the necessary stability, and simultaneously allows easy lateral access to the lower part of the ceramic grill from at least one side and provides a working surface. A further aim of the invention is to provide a supporting structure for a ceramic grill that enables the positioning of a ceramic grill in the vertical axis. Unexpectedly, the aim of the invention was achieved in the form of a supporting structure according to the invention.

The invention discloses a supporting structure for a ceramic grill comprising a substantially cuboidal framework supporting structure, that comprises vertical edges and horizontal edges, and a supporting bracket, characterized in that the bracket, which has a shape resembling the letter 'h', comprises a longer, substantially vertical element, a shorter, substantially vertical element and a connecting horizontal element supported by the said shorter, substantially vertical element, , wherein the longer element connects the two horizontal edges of the structural frame, and the supporting bracket is further provided with an adapter for supporting and positioning the grill in the vertical axis, wherein the adapter is supported by the horizontal element and additionally fixed to the side wall of the longer vertical element.

The supporting frame, the supporting bracket and the adapter of the supporting structure according to the invention are preferably made of metal, especially steel, especially steel in the form of a steel profile of the thickness of at least 2 mm, or aluminium. The use of these materials enables the achievement of adequate rigidity, stability and structural strength. In addition, steel profiles of the thickness of at least 2 mm are easy to weld, which also helps to preserve the geometry of the frame and to eliminate its deformation.

The adapter of the supporting structure of the ceramic grill equally preferably comprises a main profile and at least two lateral profiles arranged symmetrically on both sides of the main profile in one plane, especially preferably six lateral profiles. Different numbers of lateral profiles were tested and it was found that in the case of ceramic grills weighing over 100 kg, a minimum of 6 lateral profiles were necessary to ensure the stability of the grill's position and to maintain the desired geometry of the lateral profiles. When 4 lateral profiles are used, the grill holds up, but the movement of the lid may cause the displacement of the centre unit of the grill.

All lateral profiles are especially preferably fitted with a spacer. Such spacers enable the adjustment of the support points and levelling points of ceramic grills.

The supporting structure according to the invention preferably also comprises a positioning system comprising at least four spacers. The central units of ceramic grills sometimes vary in size. The positioning system makes it possible to compensate for any differences in the circumference of the ceramic grill's central unit in the horizontal axis. The positioning system further reduces the displacement of the grill's bottom bowl when the top cover is opened.

The supporting structure according to the invention equally preferably also comprises a bracing profile that connects the two horizontal edges of the base of the supporting frame. The bracing profile provides additional stability to the supporting structure by transferring the load evenly onto the ground.

The supporting structure according to the invention preferably comprises a strut located between the vertical elements and the horizontal element. The installation of struts between the vertical elements and the horizontal element allows the required load-bearing capacity to be achieved using thinner profiles in the support, which reduces the quantity of materials and weight.

The base of the supporting structure according to the invention equally preferably also comprises elements for the installation of a pedestal, legs and/or wheels, installed between the horizontal edges of the base. Such arrangement of these elements enables the installation of support points for the stable positioning of the structure in an outdoor environment.

The supporting structure according to the invention preferably also comprises tabletop supports. The tabletop supports enable the installation of a working tabletop around a ceramic grill.

The supporting structure according to the invention is advantageous in that it provides a sturdy and stable support for ceramic grills weighing 80 kg or more, especially ceramic grills of the kamado type.

The object of the invention is illustrated by the non-limiting embodiments of the invention and by the figures, wherein:
- Fig. 1: shows an axonometric view of the supporting structure for a ceramic grill,
- Fig. 2: shows supporting bracket comprising three elements: two vertical elements and a horizontal element,
- Fig. 3: shows supporting bracket comprising four elements: two vertical elements, a horizontal element and, in addition, a bracing profile,
- Fig. 4: shows supporting bracket comprising three elements: two vertical elements, a horizontal element, a bracing profile, and, in addition, a strut,
- Fig. 5: shows an adapter used to support a ceramic grill,
- Fig. 6: shows a supporting structure for a ceramic grill provided with four spacers,
- Fig. 7: shows a supporting structure for a ceramic grill provided with four spacers, wherein two spacers are attached to the tabletop supports,
- Fig. 8: shows a supporting structure for a ceramic grill provided with various additional components.

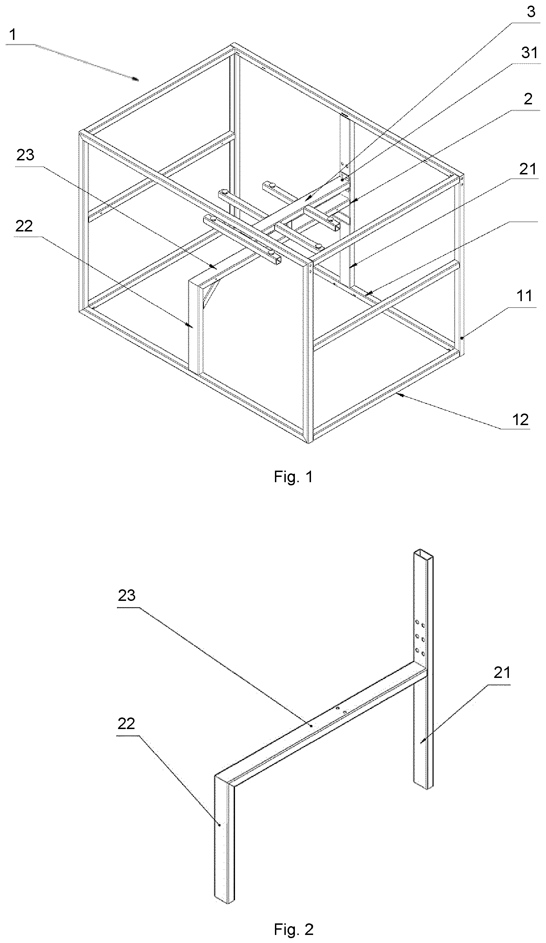

The supporting structure according to the first embodiment of the invention illustrated in Fig. 1 comprises framework supporting structure 1 and bracket 2 made of 25x25x1 mm steel profiles. The use of large ceramic grills caused geometric distortions of this supporting frame variant in the form of the 'pulling' of the elements during welding, which required further design work. In the next version of the frame, thicker 25x25x2 mm profiles were used, which allowed the designed geometry to be maintained during welding. Following the installation of a ceramic grill and load application onto the frame, it was found that the flexural strength index of the profile was too low, resulting in the excessive deflection of bracket 2. In the next version, therefore, the profile of bracket 2, which is part of support frame 1, was changed from a 25x25x2 mm profile to a 25x50x2 mm profile, which eliminated the deformation of the supporting structure when a ceramic grill weighing more than 80 kg was placed on it.

The supporting structure according to the first embodiment includes framework supporting structure 1 comprising four vertical edges 11 and four horizontal edges 12 and centrally positioned supporting bracket 2 of the shape resembling the letter h. As shown in Fig. 2, supporting bracket 2 comprises 3 elements: longer substantially vertical element 21, shorter substantially vertical element 22 and horizontal element 23 that connects the two vertical elements. In order to ensure the maximum functionality of the structure and easy access to the side wall of the grill, e.g. to remove ash, vertical elements 21, 22 should be parallel to each other, longer vertical element 21 should be connected to the two elements with the rear lower and upper horizontal edge 12 of frame 1 and shorter vertical element 22 should be connected with the end of horizontal element 23 and with the front lower horizontal edge 12 of frame 1.

According to this supporting structure, horizontal element 23 of bracket 2 supports adapter 3 for supporting and positioning the grill in the vertical axis. Adapter 3 can be additionally attached to side wall 24 of longer vertical element 21, which improves the stability of the structure.

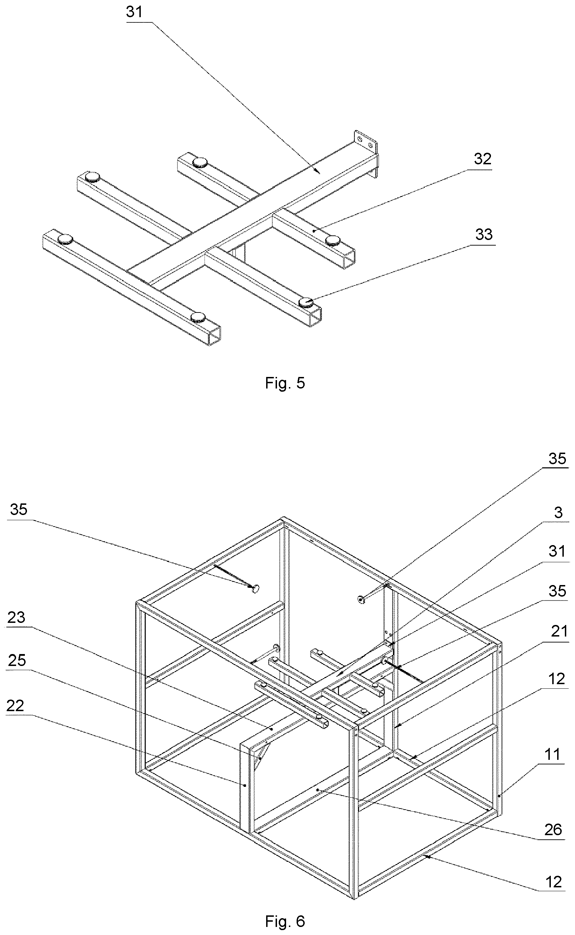

According to this embodiment of the invention, adapter 3 (Fig. 5) comprises main profile 31 and six side profiles 32. Adapter 3 may also have a different shape and a different number of side profiles, e.g. adapter 3 may comprise two side profiles 32 symmetrically arranged on both sides of main profile 31. Each of the side profiles 32 can be fitted with a spacer 33 to hold the ceramic grill.

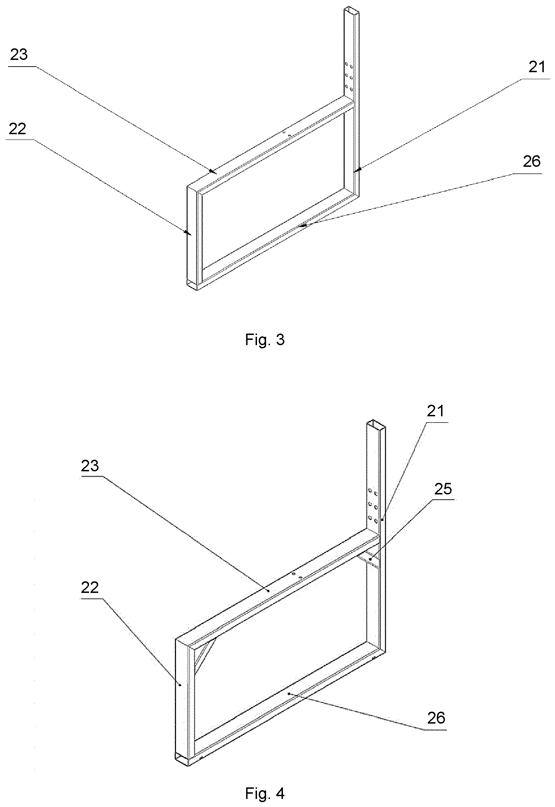

According to the second embodiment of the invention shown in Fig. 6, the supporting frame is provided with bracing profile 26 that connects two horizontal edges 12 of the base of frame 1, which gives the structure greater stability by providing an additional support point for the installation of a ceramic grill on the supporting structure. Bracing profile 26 is also shown in Fig. 3 and 4 as a part of supporting element 22.

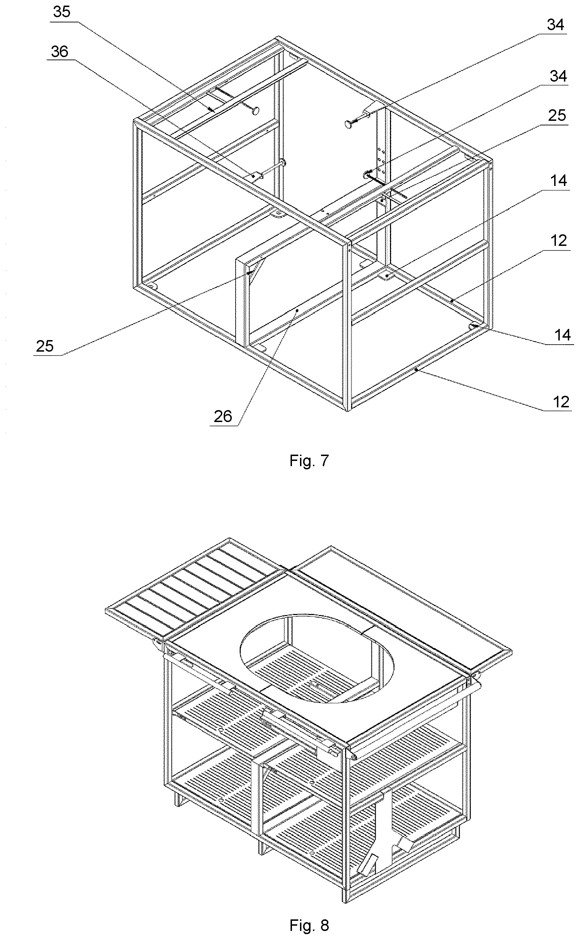

According to this embodiment, the supporting frame is additionally equipped with a positioning system comprising four spacers 34. In another version of this embodiment shown in Fig. 7, two side spacers 35 are attached to tabletop supports 35. Positioning system 35 has been shown on the frame of the second embodiment of the invention, but the positioning system can be used in any of the other support frame variants.

According to this embodiment of the invention, Fig. 6 and 7 also show struts 25 incorporated in the structure of bracket 2 to increase the rigidity of the structure. This component is independent of the positioning system.

According to this embodiment of the supporting structure, Fig. 7 also shows elements 14 for the installation of a pedestal, legs and/or wheels.

In all embodiments of the supporting structure according to the invention, supporting frame 1, support bracket 2 and adapter 3 are made of metal, especially of steel or aluminium.

When designing the supporting structure, the authors of the invention assumed the implementation of a supporting frame-based system. At the initial development stage, the supporting frame was designed using bolted components. However, the planned load, approximately 150 kg, required the use of highly-rigid connections, therefore the authors decided to use welded connections.

## Claims

1. A supporting structure for a ceramic grill comprising substantially cuboidal framework supporting structure (1) that comprises vertical edges (11) and horizontal edges (12) and supporting bracket (2), **characterised in that** supporting bracket (2), which has a shape resembling the letter 'h', comprises longer substantially vertical element (21), shorter substantially vertical element (22) and connecting horizontal element (23) supported by the said shorter element (22), wherein longer element (21) connects two horizontal edges (12) of support frame (1), and supporting bracket (2) is further provided with adapter (3) for supporting and positioning the grill in the vertical axis, wherein adapter (3) is supported by horizontal element (23) and additionally fixed to side wall (24) of longer vertical element (21).

2. The supporting structure according to claim 1, **characterised in that** support frame (1), support bracket (2) and adapter (3) are made of metal, preferably steel, more preferably steel in the form of a steel profile of the thickness of at least 2 mm, or aluminium.

3. The supporting structure according to claim 1 or 2, **characterised in that** adapter (3) comprises main profile (31) and at least two side profiles (32) symmetrically arranged on both sides of main profile (31) in one plane, preferably six side profiles (32).

4. The supporting structure according to claim 3, **characterised in that** each side profile (32) is provided with spacer (33).

5. The supporting structure according to claim 1, **characterised in that** in it additionally includes positioning system (34) comprising at least four spacers (35)

6. The supporting structure according to claim 1, **characterised in that** it additionally comprises bracing profile (26) that connects two horizontal edges (12) of the base of support frame (1).

7. The supporting structure according to claim 1, **characterised in that** it includes strut (25) located between vertical element (21, 22) and horizontal element (23).

8. The supporting structure according to claim 1, **characterised in that** it additionally comprises elements (14) installed between horizontal edges (12) of the base for the installation of a pedestal, legs and/or wheels.

9. The supporting structure according to claim 1, **characterised in that** it additionally comprises tabletop supports (35).
